# EUROPÄISCHE PATENTSCHRIFT

(11) **EP 1 650 476 B1**
(45) Veröffentlichungstag und Bekanntmachung des Hinweises auf die Patenterteilung: **22.08.2007**
(21) Anmeldenummer: 05022536.6
(22) Anmeldetag: 15.10.2005
(51) Int. Cl.: F16H 55/30, F16H 7/06

(54) **An- oder Abtriebsrad mit integriertem Spann- und Dämpfungselement für überschussgeschmierte Endloskettentriebe**
Drive or driven wheel with integrated tensioning and damping element for lubricated chain drives
Roue d'entraînement ou roue entraînée avec d'element de serrage et de d'amortissement integré pour transmissions à chaîne

(30) Priorität: 20.10.2004 DE 102004051042
(43) Veröffentlichungstag der Anmeldung: 26.04.2006
(73) Patentinhaber: EBERT Kettenspanntechnik GmbH, 04435 Schkeuditz (DE)
(72) Erfinder: Ebert, Siegfried, 04435 Schkeuditz (DE); Meier, Hartmut, 06779 Schierau OT Möst (DE); Tanzmann, Horst, 04157 Leipzig (DE); Ebert, Frank, 04435 Schkeuditz (DE)

(56) Entgegenhaltungen:
- DE-C1- 19 929 667
- PATENT ABSTRACTS OF JAPAN Bd. 1996, Nr. 06, 28. Juni 1996 (1996-06-28) -& JP 08 054051 A (MITSUI MIIKE MACH CO LTD), 27. Februar 1996 (1996-02-27)
- PATENT ABSTRACTS OF JAPAN Bd. 007, Nr. 041 (M-194), 18. Februar 1983 (1983-02-18) -& JP 57 190160 A (YAMAHA HATSUDOKI KK), 22. November 1982 (1982-11-22)

## Beschreibung

Die Erfindung betrifft ein An- oder Abtriebsrad mit integriertem Spann- und Dämpfungselement für Endloskettentriebe, welche in Überschussschmierung, beispielsweise Tauchschmierung oder Druckumlaufschmierung, betrieben werden, entsprechend dem Oberbegriff des Anspruches 1.

Die Erfindung ist anwendbar für Rollenkettentriebe und Hülsenkettentriebe im

Maschinen- und Fahrzeugbau.

Aus der JP 08 054051 A (Patent Abstracts of Japan Bd. 96, Nr. 06,1996-06-28) ist ein Kettenrad mit Dämpfungsteil bekannt. Das Dämpfungsteil ist überstehend zum Zahnprofil des Kettenrades zwischen zwei das Zahnprofil des Kettenrades bildenden Zahnscheiben, planseitig und konzentrisch bündig fest angeordnet. Das Dämpfungsteil und die Zahnscheiben weisen gleiche Zähnezahl auf.

Der Ketteneinlaufstoß wird dadurch reduziert, dass das Dämpfungsteil die direkte Kollision zwischen den metallischen Zahnscheiben des Kettenrades und der metallischen Kette verhindert, indem die Rollen der Kette zuerst in Kontakt zum nichtmetallischen Dämpfungsteil kommen, im Dämpfungsteil durch Deformation gedämpft werden und anschließend durch die im Umschlingungsbogen wirkende Zugkraft in das der Momentübertragung dienende Zahnprofil des Kettenrades eingreifen.

Als fester, nichtmetallischer Werkstoff für ein derartiges Dämpfungsteil kommen Kunststoffe aus der Gruppe der Elastomere zur Anwendung.

Nach der Deformation des Dämpfungsteils erfolgt außerhalb des Umschlingungsbogens die elastische und teilweise visko-elastische Rückverformung der deformierten Abschnitte des Dämpfungsteils bis in die Nähe der Ausgangsform.

Dieses Kettenrad mit Dämpfungsteil hat den Mangel, dass die Dämpfungsleistung, insbesondere der im Rollenbett überstehenden Bereiche des Dämpfungsteils, während der Betriebsdauer mit einer sehr großen Anzahl von Verformungs-Wiederholungen nachlässt und der Dämpfungsring bezüglich der Dämpfungsfunktion verschleißt. Damit wächst das Laufgeräusch des Kettentriebes driftend.

Die technische Ursache dieses Mangels besteht in der an den Kontaktbereichen Kette/Dämpfungsteil über die Betriebsdauer zunehmenden, nicht reversiblen Rückstellung der plastischen Komponente der Verformung des Dämpfungsringes, grafisch darstellbar als Hysterese, infolge des sich bei allen Kunststoffen einstellenden Druckverformungsrestes, wobei der Kennwert "Druckverformungsrest" eines Kunststoffes angibt, welcher Verformungsanteil nach Entspannung zurückgeblieben ist.

Aus der gattungsgemäßen JP 57 190160 A (Patent Abstracts of Japan Bd. 007, Nr. 041 (M 194), 1983-02-18 ist ein Kettenrad mit einem mehrteilig strukturierten elastischen Dämpfungsring bekannt.

Dieser Dämpfungsring ist in der Umlaufebene der Kettenlaschen neben dem Kettenrad in einem Nabenring angeordnet.

Der Dämpfungsring weist in Verbundstruktur entweder einen äußeren weichelastischen Kranz mit Außenwellenprofil und einen inneren hartelastischen Stützring mit Innenwellenprofil auf oder besteht vollständig aus weichelastischem Werkstoff mit eingelegtem Federring, welcher die Federkonstante des Dämpfungsringes vergrößert. Das Außenwellenprofil des Dämpfungsringes ist in Überdeckung zum inneren Umlaufkreis der Kettenlaschen und kommt damit in Kontakt zu den Laschen.

Die Dämpfung gegen den Kettenaufschlag erfolgt jeweils bei Kontakt zwischen den Wellenbergen des Dämpfungsringes und den Laschen durch Deformation der

Wellenberge des Dämpfungsringes.

Die exzentrische Form des Dämpfungsringes verschiebt die Wellenberge im Ketteneinlaufbereich in eine größere Umlaufbahn, bezogen auf das Kettenrad, und erzielt damit eine größere Überdeckung zum inneren Umlaufkreis der Kettenlaschen. Die Spielspalte der Hohlräume im Nicht-Eingriffsbereich von Innenwellenprofil und Nabenring sind durch diesen seitlich und profilinnenseitig verschlossen und werden nicht vom Schmiermittel durchströmt.

Dieses Kettenrad mit Dämpfungsring hat den Mangel, dass die Dämpfungsleistung, insbesondere des äußeren weichelastischen Kranzes mit Außenwellenprofil, während der Betriebsdauer mit einer sehr großen Anzahl von Verformungs-Wiederholungen nachlässt und der Dämpfungsring bezüglich der Dämpfungsfunktion verschleißt. Damit wächst das Laufgeräusch des Kettentriebes driftend.

Die technische Ursache dieses Mangels besteht in der an den Kontaktbereichen Kette/Dämpfüngsteil über die Betriebsdauer zunehmenden, nicht reversiblen Rückstellung der plastischen Komponente der Verformung des Dämpfungsringes, grafisch darstellbar als Hysterese, infolge des sich bei allen Kunststoffen einstellenden Druckverformungsrestes, wobei der Kennwert "Druckverformungsrest" eines Kunststoffes angibt, welcher Verformungsanteil nach Entspannung zurückgeblieben ist.

Ziel der Erfindung ist ein An- oder Abtriebsrad mit integriertem Spann- und

Dämpfungselement für Endloskettentriebe mit gleichbleibender Dämpfungswirkung.

Die technische Aufgabe der Erfindung besteht in der Schaffung eines An- oder Abtriebsrades mit integriertem Spann- und Dämpfungselement für Endloskettentriebe, welches eine reproduzierbare Dämpfung des Ketteneinlaufs aufweist.

Erfindungsgemäß wird die Aufgabe durch die kennzeichnenden Merkmale des Anspruchs 1 gelöst.

Das Spann- und Dämpfungselement ist ein rotational elastischer Zahnring mit ringförmig-wellenband-ähnlicher Gestalt, welcher außenseitig ein zur Kette greiffähiges Zahnprofil und innenseitig ein zu einem Zahnrad zahnweise formkorrespondentes Zahnprofil mit formstabilen Innenzahnbögen aufweist, wobei der Durchmesser dieses innenseitigen Zahnprofils, bezogen auf den ungespannten Zahnring, größer ist als der Fußkreisdurchmesser des Zahnrades.

Die Innenzahnbögen des Zahnringes sind formstabil und gewährleisten damit die zahnweise Stabilität des Zahnringes.

Die Zahnköpfe des Zahnringes sind elastisch verformbar und gewährleisten damit die Elastizität des Zahnringes.

Die Formkorrespondenz des Zahnprofils mit formstabilen Innenzahnbögen zum

Zahnrad gewährleistet die Greiffähigkeit zur Momentübertragung von der Kette über den Zahnring auf das Zahnrad.

Der innenseitige Durchmesser des Zahnringes ist größer als der Fußkreisdurchmesser des Zahnrades. Die auf beiden Durchmessern liegenden Flächen des Zahnringes und des Zahnrades sind zueinander formkorrespondent und gewährleisten somit den Formschluss zur Momentübertragung von der Kette in das Zahnrad.

Bei gleicher Zähnezahl von Zahnring und Zahnrad besteht eine Durchmesserdifferenz, welche dem potentiellen Feder- und Dämpfungsweg entspricht.

Bei größerer Zähnezahl des Zahnringes gegenüber der Zähnezahl des Zahnrades besteht eine Umfangsdifferenz, welche ebenfalls dem potentiellen Feder- und Dämpfungsweg entspricht.

Unabhängig von der Zähnezahl besteht Spiel zwischen Zahnrad und Zahnring.

Das Verhalten des Zahnringes als Feder resultiert daraus, sich bei Einwirken von Kettenzug- und Kettenaufschlagkräften elastisch zu deformieren, bis der Kontakt zum Zahnrad eintritt und bei Wegfall dieser Einwirkungen die ursprüngliche spannungsfreie Form außerhalb des Kontaktes mit dem Zahnrad vollständig wieder anzunehmen oder bis zur Straffung der Kette elastisch anzustreben.

Die Breite des Zahnringes ist kleiner als die innere Weite der Kette. Damit ist er eingriffsfähig zur Kette.

Infolge des Übergreifens der Kettenlaschen über den Zahnring und das Zahnrad erfolgt die Lagesicherung in der Umlaufebene des Kettentriebes.

Das radiale Spiel zwischen außenliegender Kontur des Zahnprofils des Zahnrades und innenliegender Kontur des Zahnprofils des ungespannten Zahnringes bildet zahnweise seitlich offene Spielspalte.

Diese Spielspalte werden an den seitlich offenen Flächen vom Schmiermittel überströmt und dabei mit diesem gefüllt. Das Schmiermittel ist zugleich hydraulisches Medium.

Mit Ketteneinlauf in den Zahnring und mit beginnendem Zahneingriff des Zahnringes in das Zahnrad wird das radiale Spiel und somit jeder Spielspalt innerhalb des Umschlingungsbogens verringert und im Verlauf des Umschlingungsbogens bis zum vollständigen Eingriff der formkorrespondenten Zahnprofile der beiden Elemente geschlossen.

Dabei wird das hydraulische Medium aus den Spielspalten verdrängt.

Die dazugehörige Verdrängungsarbeit entspricht der hydraulischen Dämpfung.

Im Zahnauslauf wird das radiale Spiel vergrößert und außerhalb des Umschlingungsbogens werden die Spielspalte vergrößert und geöffnet, so dass, unterstützt durch den beim Öffnen entstehenden Unterdruck, sowohl durch Ansaugbewegung als auch durch die auf das Schmiermittel wirkende Zentrifugalkraft das Füllen des seitlich offenen Spielspalte erfolgt.

Das Füllen und die Schließbewegung entsprechen der Füll- und Schließbewegung einer hydraulischen Verdrängerzelle.

Der Erfindung liegt somit der Gedanke zugrunde, das in bekannter Weise in überschussgeschmierten Kettentrieben entlang der Flanken der Kettenräder in Richtung des Zahnprofils und mindestens im Umschlingungsbogen gegen die Kette zentrifugierte Schiermittel als hydraulisches Medium zur Dämpfung des Ketteneinlaufes zu nutzen.

Das Kettenrad mit integriertem Spann- und Dämpfungselement stellt ein FederDämpfer- System dar, bei dem die elastische Funktion durch den elastisch verformbaren Zahnring und die Dämpfungsfunktion durch hydraulische Verdrängerzellen realisiert sind.

Durch die Rotation dieses Systems bei der Momentübertragung werden sowohl die elastische Funktion als auch die Dämpfungsfunktion reproduziert.

Der kinematische Weg des Kettentriebes zur Momentübertragung verläuft von der Kette direkt durch den im Außen- und Inneneingriff von der Kette, beziehungsweise dem Kettenrad, kontaktierten Zahnring, wobei die Schließbewegung der Spielspalte den Ketteneinlaufstoß und zusätzlich die polygonisch ungleichförmige Übertragung der Drehbewegung in das Kettenrad dämpft.

Infolge des im Überschuss anwesenden Schmiermittels, welches zugleich als hydraulisches Medium verwendet wird, ist die Reproduzierbarkeit dieser Dämpfungsfunktion gewährleistet.

Hinsichtlich des Übersetzungsverhältnisses des Kettentriebes sei darauf hingewiesen, dass die Zähnezahl des Zahnrades als Bezugsgröße einzusetzen ist.

Die Erfindung soll nachstehend an Ausführungsbeispielen näher erläutert werden.
Fig. 1 zeigt eine schematische Seitenansicht eines Rollenkettentriebes mit einem Zahnring, welcher die gleiche Zähnezahl aufweist wie das Zahnrad.
Fig. 2 zeigt eine schematische Seitenansicht eines Rollenkettentriebes mit einem Zahnring, welcher eine größere Zähnezahl aufweist als das Zahnrad.

### Beispiel 1:

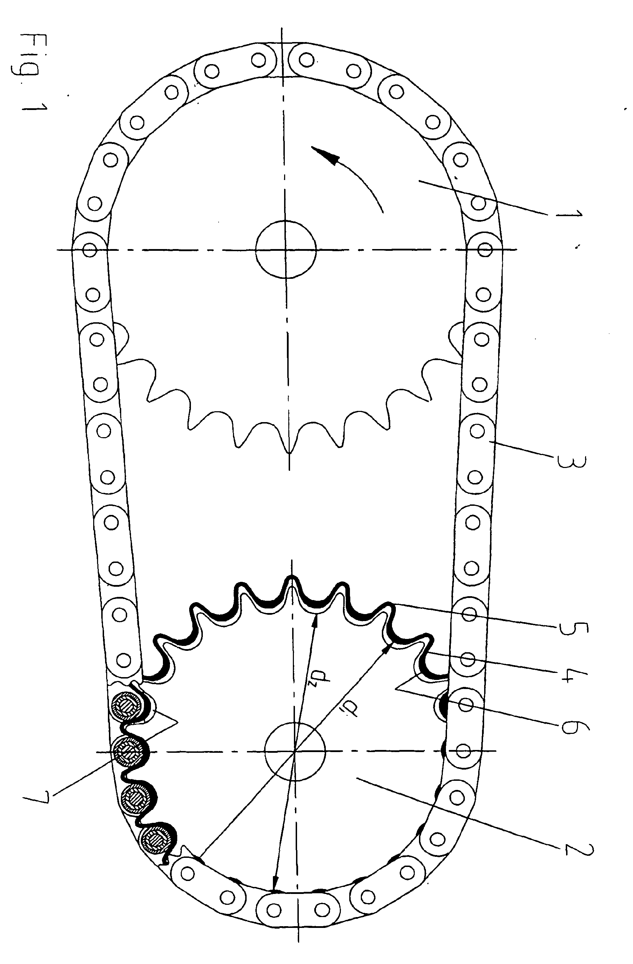

Wie aus Fig. 1 ersichtlich, besteht der Kettentrieb aus dem Kettenrad 1, dem Zahnrad 2, der Kette 3 und dem rotational elastischen Spann- und Dämpfungselement in Form eines zahnweise elastischen Zahnringes 4, welcher in der Umlaufebene des Kettentriebes um das Zahnprofil des Zahnrades herum mit radialem Spiel angeordnet ist.

Die Kette umschlingt den Zahnring und übergreift mit ihren Laschen den Zahnring und das Zahnrad.

Der Zahnring hat eine wellenbandähnliche Gestalt. Seine Elastizität resultiert aus den elastischen Zahnköpfen 5 des Zahnringes. Die Innenzahnbögen 6 des Zahnringes sind formstabil.

Der innenseitige Durchmesser des Zahnringes dᵢ ist größer als der Fußkreisdurchmesser d_{z} des Zahnrades. Die auf beiden Durchmessern liegenden Flächen des Zahnringes und des Zahnrades sind zueinander formkorrespondent und gewährleisten somit den Formschluss zur Momentübertragung von der Kette in das Zahnrad.

Infolge der unterschiedlichen Durchmesser besteht eine Durchmesserdifferenz zwischen Zahnring und Zahnrad. Diese Durchmesserdifferenz entspricht dem potentiellen Feder- und Dämpfungsweg am Beginn und am Ende des Umschlingungsbogens der Kette.

Der Zahnring federt unter der Einwirkung von Kettenzug- und Kettenaufschlagkräften zahnweise jeweils soweit in das Zahnrad ein, bis es zum Kontakt an den formkorrespondenten Flächen kommt.

Die Breite des Zahnringes ist kleiner als die innere Weite der Kette. Damit ist er eingriffsfähig zur Kette und wird in der inneren Weite der Kette geführt.

Dadurch erfolgt Lagesicherung des Zahnringes in der Umlaufebene des Kettentriebes. Die Differenz infolge der unterschiedlichen Durchmesser von Zahnrad und Zahnring bedeutet ein radiales Spiel zwischen der außenliegenden Kontur des Zahnrades und der innenliegenden Kontur des Zahnringes für jeden zahnweisen Eingriff. Jedes Zahnpaar des Zahnrades mit dem Zahnring bildet einen zweiseitig offenen Spielspalt 7.

Im überschussgeschmierten Kettentrieb steht das Schmiermittel auch als hydraulisches Medium zur Verfügung. Dieses hydraulische Medium wird entlang der Flanken der rotierenden Räder in Richtung des Zahnprofils und mindestens im Umschlingungsbogen gegen die Kette zentrifugiert.

Dabei überflutet und füllt es jeden Spielspalt.

Mit Ketteneinlauf in den Zahnring und mit beginnendem Zahneingriff des Zahnringes in das Zahnrad wird das radiale Spiel und somit jeder Spielspalt innerhalb des Umschlingungsbogens verringert und im Verlauf des Umschlingungsbogens bis zum vollständigen Eingriff der jeweiligen Zähne geschlossen.

Dabei wird das hydraulische Medium aus den Spielspalten verdrängt. Die dazugehörige Verdrängungsarbeit entspricht der Dämpfung.

Im Bereich des Kettenauslaufs am Ende des Umschlingungsbogens wird das radiale Spiel vergrößert. Dadurch werden die Spielspalte geöffnet.

Die Schließbewegung und das Öffnen der Spielspalte, umgeben von einem hydraulischen Medium wie dem Schmiermittel, entsprechen der Schließ- und Füllbewegung hydraulischer Verdrängerzellen mit dem Grundprinzip der hydraulischen Stoßdämpfung.

### Beispiel 2:

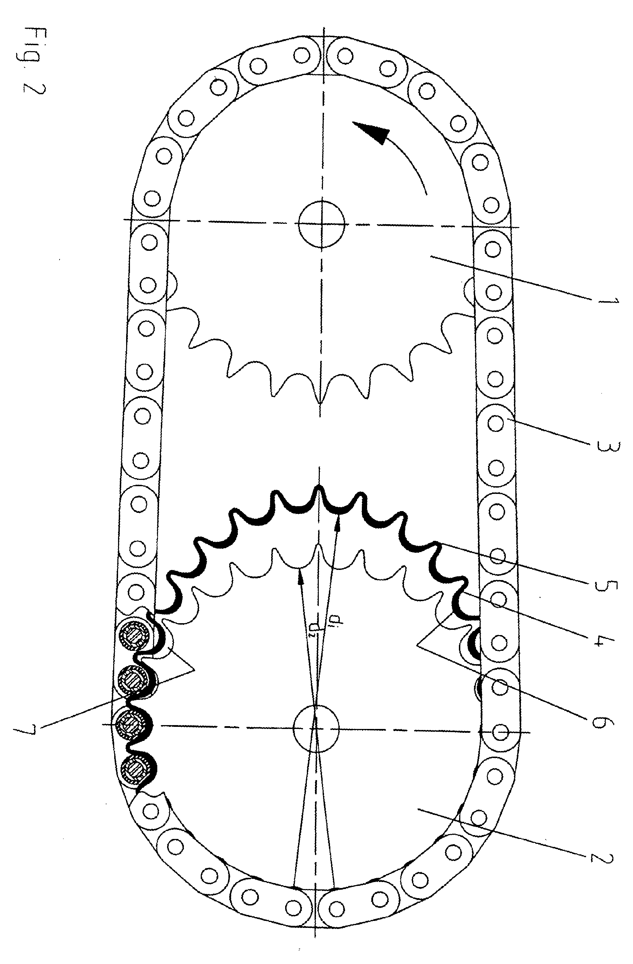

Wie aus Fig. 2 ersichtlich, besteht der Kettentrieb aus dem Kettenrad 1, dem Zahnrad 2, der Kette 3 und dem elastischen Spann- und Dämpfungselement in Form eines Zahnringes 4, welcher in der Umlaufebene des Kettentriebes um das Zahnprofil des Zahnrades angeordnet ist.

Die Kette umschlingt den Zahnring und übergreift mit ihren Laschen den Zahnring und das Zahnrad. Der Zahnring hat eine wellenbandähnliche Gestalt. Seine Elastizität resultiert aus den elastischen Zahnköpfen 5 des Zahnringes. Die Innenzahnbögen 6 des Zahnringes sind formstabil.

Die Zähnezahl des Zahnringes ist um 2 Zähne größer als die Zähnezahl des Zahnrades. Infolge der größeren Zähnezahl des Zahnringes sind mehrere seiner Zähne nicht im Eingriff zum Zahnrad und ragen damit frei in den Abstandsraum zwischen Kettenrad und Zahnrad.

Der innenseitige Durchmesser des Zahnringes dᵢ ist größer als der Fußkreisdurchmesser d_{z} des Zahnrades. Die auf beiden Durchmessern liegenden Flächen des Zahnringes und des Zahnrades sind zueinander formkorrespondent und gewährleisten somit den Formschluss zur Momentübertragung von der Kette in das Zahnrad.

Es besteht eine Durchmesserdifferenz zwischen Zahnring und Zahnrad.

Im Vergleich zu dem im Beispiel 1 gezeigten Rollenkettentrieb mit einem Zahnring, welcher die gleiche Zähnezahl aufweist wie das Zahnrad, weist der Zahnring, welcher eine größere Zähnezahl als das Zahnrad hat, bezogen auf eine konzentrische projizierte Anordnung zum Zahnrad eine größere Durchmesserdifferenz auf.

Damit besteht ein größerer Spannweg des Zahnringes bei Bedarf einer größeren Lostrumdauslenkung.

Der Zahnring federt unter der Einwirkung von Kettenzug- und Kettenaufschlagkräften zahnweise jeweils soweit in das Zahnrad ein, bis es zum Kontakt an den formkorrespondenten Flächen kommt.

Die hydraulische Dämpfung erfolgt wie bereits zu Beispiel 1 dargelegt.

Dieses beispielsweise erläuterte Spann- und Dämpfungselement ist besonders dann anwendbar, wenn bei minimalem Bauraum eine größere Lostrumauslenkung erforderlich ist.

## Patentansprüche

1. An- oder Abtriebsrad, nachfolgend Zahnrad (2) genannt, mit integriertem Spann- und Dämpfungselement für überschussgeschmierte Endloskettentriebe,
- wobei das Spann- und Dämpfungselement ein Zahnring (4) ist, dessen Breite kleiner ist als die innere Weite einer Kette (3) des Endloskettentriebes,
**dadurch gekennzeichnet, dass**
- der Zahnring ein aussenseitig zur Kette mit elastisch verformbaren Zahnköpfen (5) greiffähiges und innenseitig zu dem in gleicher Rotationsebene, mit radialem Spiel und im Inneren angeordneten Zahnrad (2) ein zahnweise formkorrespondentes Zahnprofil mit gleicher oder grösserer Zähnezahl, bezogen auf das Zahnrad, aufweist,
- wobei der innenseitige, an formstabile Innenzahnbögen (6) grenzende Durchmesser (di) des Zahnringes (4) größer ist als der Fusskreisdurchmesser (dz) des Zahnrades (2),
- wobei im Zahnring-Zahnrad-Eingriff seitlich offene, während der Abwälzung hydraulisch-volumenveränderliche, Spielspalte (7) aus zahnringseitiger konvexer Verdrängerwand und zahnradseitiger konkaver Verdrängerwand bestehen.

## Claims

1. Drive or driven wheel, following called gearwheel, with integrated tensioning and damping element for surplus- lubricated continuous chain drives,
- wherein the tensioning and damping element is a toothed ring (4), its width is smaller than the inside width of a chain (3) of the continuous chain drive,
**characterised in that**
- the toothed ring have an outsides to the chain with elastically ductile tooth heads (5) mesh-able and insides to the in the same rotation level, with radial play and inside arranged gearwheel (2) a tooth by tooth form-corresponding tooth profile with the same or larger number of teeth, related to the gearwheel,
- wherein the inside, on form-stable inner tooth bows (6) bordering diameter (di) of the toothed ring (4) is larger than the root circle diameter (dz) of the gearwheel (2),
- wherein by the toothed ring-gearwheel-meshing laterally open, during the rolling hydraulic volume variable, play gaps (7) consist of toothed ring-lateral convex displacing wall and gearwheel-lateral concave displacing wall.

## Revendications

1. Roue motrice ou d'entraînement, par la suite désignée par roue dentée (2) avec élément de serrage et d'amortissement intégré pour entraînement à chaîne en continue lubrifié par surplus,
- l'élément de serrage et d'amortissement étant une bague dentée (4) dont la largeur est inférieure à la largeur intérieure de la chaîne (3) de l'entraînement à chaîne continue,
**caractérisée en ce que**
- la bague dentée est une roue dentée (2) pouvant se mettre en prise extérieurement par rapport à la chaîne avec des têtes dentées (5) à déformation élastique et intérieurement y étant disposée au même niveau de rotation avec jeu radial et à l'intérieur, présente un profil denté à forme correspondante au niveau dent avec le même nombre ou un nombre supérieur de dents, en référence à la roue dentée,
- le diamètre (dᵢ) intérieur de la bague dentée (4) attenant aux secteurs dentés intérieurs (6) à forme stable étant supérieur au diamètre du pied de denture (d_{z}) de la roue dentée (2),
- des fentes de jeu (7) ouvertes latéralement dans l'engrènement bague dentée-roue dentée, à modification de volume par action hydraulique pendant le roulement se composent d'une paroi volumétrique convexe côté bague dentée et d'une paroi volumétrique concave côté roue dentée.
